# EUROPÄISCHE PATENTANMELDUNG

(11) **EP 4 269 185 A1**
(43) Veröffentlichungstag der Anmeldung: **01.11.2023**
(21) Anmeldenummer: 23171101.1
(22) Anmeldetag: 02.05.2023
(51) Int. Cl.: B60R 22/22, B60N 2/68

(54) **FREIZEITFAHRZEUG, INSBESONDERE WOHNMOBIL, UND GURTBOCKANORDNUNG**

(30) Priorität: 30.04.2022 DE 102022110610
(71) Anmelder: Hymer GmbH & Co. KG, 88339 Bad Waldsee (DE)
(72) Erfinder: Hörmann, Hannes, 88339 Bad Waldsee (DE); Fiedler, Andreas, 89231 Neu-Ulm (DE)
(74) Vertreter: Waller, Stefan

(57) **Zusammenfassung**

Gurtbockanordnung (1) für ein Freizeitfahrzeug (2), insbesondere ein Wohnmobil, mit einem Gurtbock (4), an dem zumindest ein Anbauteil (5, 6) befestigbar ist. Hierbei wird vorgeschlagen, dass an dem Gurtbock (4) zumindest eine Nutschiene (7, 8) befestigt ist, dass das Anbauteil (5, 6) an der Nutschiene (7, 8) an dem Gurtbock (4) befestigbar ist und dass die Nutschiene (7, 8) so ausgestaltet ist, dass für die Befestigung des Anbauteils (5, 6) an der Nutschiene (7, 8) eine variable Befestigungsposition (9, 10) an der Nutschiene (7, 8) wählbar ist. Ferner ist ein Freizeitfahrzeug (2) mit solch einer Gurtbockanordnung (1) angegeben

## Beschreibung

Die Erfindung betrifft ein Freizeitfahrzeug, insbesondere ein Wohnmobil, mit einer Gurtbockanordnung und eine Gurtbockanordnung für ein Freizeitfahrzeug.

Aus der DE 20 2020 106 815 U1 ist eine Gurtbockanordnung für ein Wohnmobil bekannt. Die Gurtbockanordnung weist einen Gurtbock und ein Rückhaltesystem auf. Das Rückhaltesystem umfasst ein Gurtsystem und einen am Gurtbock angeordneten Haltebeschlag einer Sitzsicherung für einen Kindersitz. Hierbei sind am Gurtbock mehrere einzelne Haltebeschläge getrennt voneinander und eigenständig nebeneinander angeordnet.

Die aus der DE 20 2020 106 815 U1 bekannte Gurtbockanordnung hat den Nachteil, dass die Haltebeschläge fest vorgegebene Positionen haben. Aufgrund der festgegebenen und dadurch nicht veränderlichen Position der Montagepunkte am Gurtbock kann auf Bauraumänderung im Bereich von beispielsweise einer Sitzkiste nicht reagiert werden. Innerhalb der Sitzkiste können sich beispielsweise Installationskomponenten, wie eine Heizung, ein Sicherungskasten und dergleichen, befinden, bei denen es häufig zu Positionierungsanpassungen kommt. Eine Änderung des Gurtbocks beziehungsweise der Montagepunkte der Anbauteile und Zusatzkomponenten ist damit mit einem deutlichen Mehraufwand verbunden.

Herkömmliche Gurtböcke sind außerdem als Stahl-Schweißkonstruktionen hergestellt. Anbauteile und Zusatzkomponenten, wie beispielsweise Abstützungen, Komponententräger, Sitzkistenverstärkungen oder Sitzverstelleinheiten, werden dann an den jeweils festen, nicht veränderlichen Punkten am Gurtbock montiert. Die Befestigung erfolgt in der Regel über Schraubverbindungen vom Anbauteil zum jeweiligen Befestigungsflansch beziehungsweise Befestigungselement. Hierbei können einfache Bohrungen mit definierten Positionen vorgesehen sein.

Somit besteht eine erhebliche Einschränkung des konkreten Anwendungsfalls. Anpassungen an einen anderen Anwendungsfall erfordern dann einen hohen Konstruktionsaufwand.

Aufgabe der Erfindung ist es, eine Gurtbockanordnung für ein Freizeitfahrzeug, insbesondere ein Wohnmobil, und ein Freizeitfahrzeug anzugeben, die einen verbesserten Aufbau und eine verbesserte Funktionsweise ermöglichen.

Die Aufgabe wird durch eine Gurtbockanordnung mit den Merkmalen des unabhängigen Patentanspruchs 1 und durch ein Freizeitfahrzeug mit den Merkmalen des Patentanspruchs 10 gelöst. Vorteilhafte Weiterbildungen der Erfindung sind in den Unteransprüchen angegeben.

Die Aufgabe wird durch eine Gurtbockanordnung für ein Freizeitfahrzeug, insbesondere ein Wohnmobil, mit einem Gurtbock, an dem zumindest ein Anbauteil befestigbar ist, gelöst, wobei an dem Gurtbock zumindest eine Nutschiene befestigt ist, wobei das Anbauteil über die Nutschiene an dem Gurtbock befestigbar ist und wobei die Nutzschiene so ausgestaltet ist, dass für die Befestigung des Anbauteils an der Nutschiene eine variable Befestigungsposition an der Nutschiene wählbar ist.

Ferner wird die Aufgabe durch ein Freizeitfahrzeug, insbesondere ein Wohnmobil, mit zumindest einer solchen Gurtbockanordnung gelöst.

In vorteilhafter Weise basiert die Nutschiene auf einem Rechteckprofil, das an einer Befestigungsseite, an der das Anbauteil an der Nutschiene befestigbar ist, eine schlitzförmige Öffnung aufweist, die sich entlang einer Erstreckung der Nutschiene erstreckt. Die schlitzförmige Öffnung ermöglicht in vorteilhafter Weise eine flexible Montage des Anbauteils.

Vorteilhaft ist es, dass die Nutschiene einander zugewandte Befestigungsrippen aufweist, an denen das Anbauteil an der Nutschiene befestigbar ist, wobei die schlitzförmige Öffnung zwischen den Befestigungsrippen ausgestaltet ist. Durch die Befestigungsrippen kann insbesondere eine formschlüssige Verbindung ermöglicht werden, die hohen Belastungen standhält.

Hierbei ist es insbesondere vorteilhaft, dass zumindest eine der Befestigungsrippen Ausnehmungen aufweist, die die schlitzförmige Öffnung lokal erweitern, wobei die Ausnehmungen so ausgestaltet sind, dass zumindest ein Befestigungsmittel für die Befestigung der Nutschiene an dem Gurtbock und/oder für die Befestigung des Anbauteils an der Nutschiene in die Nutschiene einfügbar ist. Hierdurch ist eine vorteilhafte Befestigung der Nutschiene an dem Gurtbock möglich.

Vorteilhaft ist es, dass die Nutschiene zum Einfügen zumindest eines Befestigungsmittels für die Befestigung des Anbauteils an der Nutschiene in einem Zustand, in dem die Nutschiene an dem Gurtbock befestigt ist, an zumindest einer Stirnseite geöffnet ist. Hierdurch können Befestigungsmittel über die Stirnseite in die Nutschiene eingefügt werden. Dadurch kann eine besonders belastbare Befestigung realisiert werden.

Ferner ist es vorteilhaft, dass die Nutschiene so ausgestaltet ist, dass für die Befestigung des Anbauteils an der Nutschiene eine stufenlose variable Befestigungsposition an der Nutschiene wählbar ist. Hierdurch ergibt sich eine besonders große Flexibilität. Dadurch ist ein besonders großer Anwendungsbereich gegeben.

Vorteilhaft ist es, dass zumindest ein mit dem Gurtbock verbundener Stützfuß vorgesehen ist, dass die Nutschiene und eine weitere der Nutschiene entsprechende Nutschiene an einer Vorderseite des Gurtbocks angeordnet sind und dass einerseits des Stützfußes die Nutschiene und andererseits des Stützfußes die weitere Nutschiene an dem Gurtbock befestigt sind. Der Stützfuß kann hierbei gewissermaßen eine Abstützung zwischen den beiden Nutschienen ermöglichen. Dadurch kann eine besonders hohe Stabilität erzielt werden. Hierbei bleibt die Variabilität für die Befestigung der Anbauteile zumindest teilweise erhalten.

Vorteilhaft ist es, dass sich die zumindest eine Nutschiene zumindest im Wesentlichen von einer ersten Seite des Gurtbocks zu einer von der ersten Seite des Gurtbocks abgewandten zweiten Seite des Gurtbocks erstreckt. Sind beispielsweise zwei Nutschienen vorgesehen, dann erstreckt sich die eine Nutschiene von der ersten Seite des Gurtbocks und die zweite Nutschiene erstreckt sich von der zweiten Seite des Gurtbocks. Hierdurch kann bis an die Seiten des Gurtbocks eine Befestigung von Anbauteilen erfolgen.

Vorteilhaft ist es auch, dass zumindest ein Stützfuß, insbesondere ein L-förmiger Stützfuß, vorgesehen ist, der einerseits in der Nutschiene befestigt und andererseits zumindest mittelbar an einem Boden des Freizeitfahrzeugs abstützbar ist. Solch ein L-förmiger Stützfuß oder auch ein anders ausgestalteter Stützfuß ist eine vorteilhafte Ausgestaltung eines Anbauteils. Insbesondere die L-förmige Ausgestaltung hat den Vorteil, dass in vorteilhafter Weise ein Stauraum, insbesondere in einer Sitzkiste, ermöglicht wird.

Bei einer vorteilhaften Ausgestaltung kann die zumindest eine Nutschiene auch in den Gurtbock integriert sein. Speziell kann der Gurtbock aus einem vorzugsweise faserverstärkten Kunststoff realisiert sein. Die zumindest eine Nutschiene kann dann in vorteilhafter Weise in den Gurtbock einlaminiert sein. Somit kann mit Hilfe zumindest einer Nutschiene die Einschränkung der Flexibilität gelöst werden. Hierbei können auch mehrere, insbesondere auch zwei, Nutschienen vorgesehen sein, die vorzugsweise auf beiden Seiten eines Abstützfußes montiert werden. Je nach Ausgestaltung kann auch eine durchgehende Nutschiene über die gesamte Breite des Gurtgestells vorgesehen sein. An der zumindest einen Nutschiene können dann Anbauteile, insbesondere Zusatzkomponenten, wie eine Sitzkistenverstärkung über beispielsweise L-förmige Stützfüße, eine Sitzverstelleinheit oder dergleichen, angebracht werden. Anbauteile können in vorteilhafter Weise an die Nutschiene montiert werden. Hierbei können beispielsweise Sechskantschrauben, Sechskantmuttern, Nutensteine, Nutenschrauben, Hammerkopfschrauben oder dergleichen zum Einsatz kommen.

Somit besteht der wesentliche Vorteil, dass eine variable und möglichst stufenlos wählbare Positionierung von Anbauteilen vorzugsweise in Fahrzeugquerrichtung realisierbar ist. Hierdurch kann vorzugsweise ohne aufwändige konstruktive Änderungsumfänge auf Änderungen in der Ausgestaltung der Anbauteile, insbesondere einer Sitzkiste, reagiert werden. Ferner kann die Montage mittels Nutschiene vorzugsweise unabhängig vom Fahrzeug beziehungsweise einem Fahrzeuggrundriss sein, so dass sich eine universelle Anwendbarkeit für verschiedene Fahrzeuge beziehungsweise verschiedene Fahrzeuggrundrisse ergibt.

Weitere Vorteile und Einzelheiten der Erfindung werden anhand der in den schematischen Figuren dargestellten Ausführungsbeispiele näher erläutert. Hierbei zeigen:
- Fig. 1: eine Gurtbockanordnung für ein Freizeitfahrzeug in einer auszugsweisen, schematischen, räumlichen Darstellung entsprechend einem Ausführungsbeispiel der Erfindung;
- Fig. 2: die in Fig. 1 gezeigte Gurtbockanordnung, wobei die Befestigung möglicher Anbauteile dargestellt ist;
- Fig. 3: ein Detail der in Fig. 1 gezeigten Gurtbockanordnung;
- Fig. 4: eine Nutschiene in einer schematischen Darstellung, die in den in Fig. 3 gezeigtem Detail an dem Gurtbock angebracht ist;
- Fig. 5: ein Detail einer möglichen Befestigung eines in Fig. 2 gezeigten Anbauteils an einer Nutschiene und
- Fig. 6: eine schematische Darstellung zur Veranschaulichung einer Verbindung, mit der ein Anbauteil an der Nutschiene befestigbar ist.

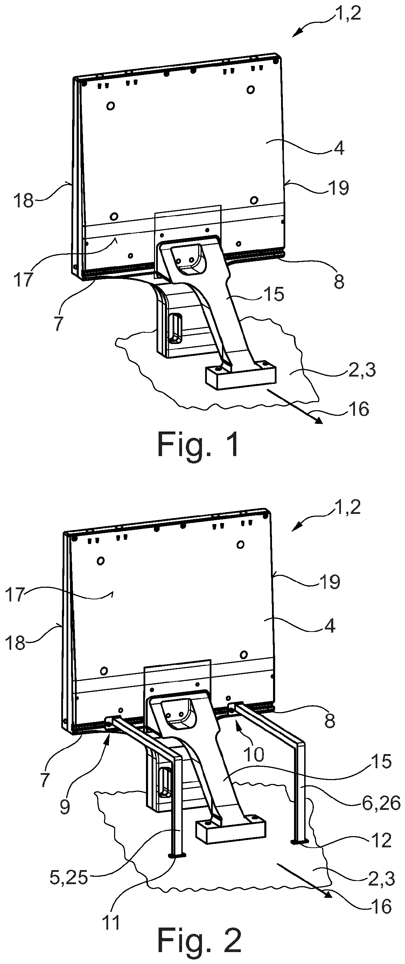

Fig. 1 zeigt eine Gurtbockanordnung für ein Freizeitfahrzeug 2 in einer schematischen, räumlichen Darstellung entsprechend einem Ausführungsbeispiel, wobei zur Vereinfachung der Darstellung nur ein Laufboden 3 des Freizeitfahrzeugs 2 schematisch veranschaulicht ist. Das Freizeitfahrzeug 2 ist vorzugsweise als Wohnmobil ausgebildet. Die Gurtbockanordnung 1 kann dann für eine hintere, insbesondere eine zweite oder dritte, Sitzreihe dienen. Ferner zeigt Fig. 2 die in Fig. 1 dargestellte Gurtbockanordnung 1, wobei Anbauteile 5, 6 vorgesehen sind, die an dem Gurtbock 4 befestigt sind.

An dem Gurtbock 4 sind Nutschienen 7, 8 befestigt. Die Nutschienen 7, 8 dienen zum Befestigen der Anbauteile 5, 6 an dem Gurtbock 4. Über die Nutschienen 7, 8 ist somit eine mittelbare Befestigung der Anbauteile 5, 6 an dem Gurtbock 4 gegeben. Hierbei ermöglichen die Nutschienen 7, 8 eine flexible Vorgabe der Befestigungspositionen 9, 10, an denen die Anbauteile 5, 6 mit der Nutschiene 7, 8 verbunden sind. Somit sind variablen Befestigungspositionen 9, 10 ermöglicht. Hierdurch ist in einfacher Weise eine Anpassung an den jeweiligen Anwendungsfall möglich. Beispielsweise können Bereiche 11, 12 des Laufbodens 3 geeignet verstärkt sein, um die Befestigung der Anbauteile 5, 6 an dem Laufboden 3 zu ermöglichen. Solche Verstärkungen können aber bei dem jeweiligen Fahrzeug beziehungsweise bei dem jeweiligen Fahrzeuggrundriss unterschiedlich realisiert sein.

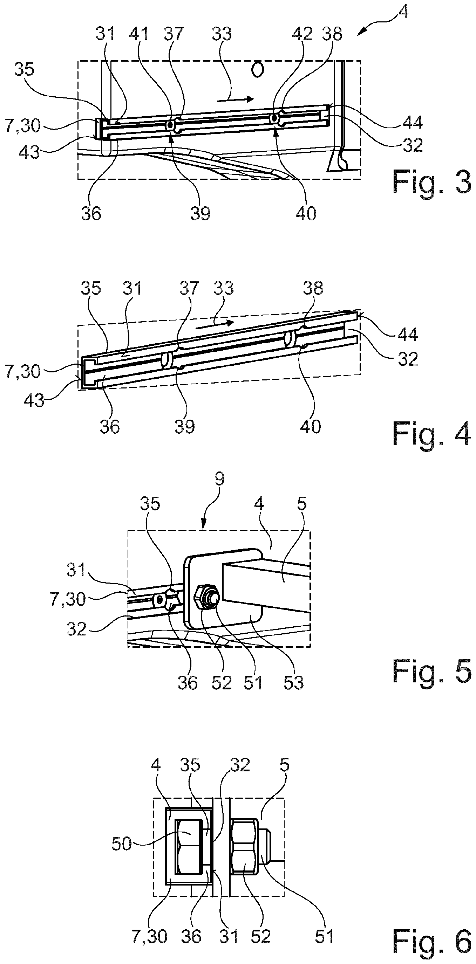

Besonders vorteilhaft ist hierbei eine stufenlos variable Wahl der Befestigungsposition 9, 10 an der Nutschiene 7, 8. In diesem Ausführungsbeispiel sind die Nutschienen 7, 8 so ausgestaltet, dass für die Befestigung der Anbauteile 5, 6 an der Nutschiene 7, 8 eine stufenlose variable Befestigungsposition 9, 10 an der Nutschiene 7, 8 wählbar ist. Dies ist auch anhand der Fig. 3 bis 6 näher beschrieben.

Außerdem ist ein Stützfuß 15 vorgesehen, der in diesem Ausführungsbeispiel direkt mit dem Gurtbock 4 verbunden ist. Der Stützfuß 15 ermöglicht in diesem Ausführungsbeispiel eine Abstützung entgegen der Fahrtrichtung 16 des Freizeitfahrzeugs 2. Hierdurch kann beispielsweise bei einem Auffahrunfall eine hohe Stützkraft auf den Gurtbock 4 ausgeübt werden. Der Stützfuß stützt sich hierbei an dem Laufboden 3 ab.

In diesem Ausführungsbeispiel sind die Nutschienen 7, 8 auf der Höhe des Stützfußes 15 an dem Gurtbock 4 befestigt. Um die direkte Befestigung des Stützfußes 15 an dem Gurtbock 4 zu ermöglichen, sind die Nutschienen 7, 8 an dem Stützfuß 15 unterbrochen beziehungsweise sind zwei Nutschienen 7, 8 vorgesehen. Die Nutschienen 7, 8 sind hierbei ebenso wie der Stützfuß 15 an der Vorderseite 17 des Gurtbocks 4 angeordnet und befestigt. Bei einer abgewandelten Ausgestaltung können die Nutschienen 7, 8 auch in den Gurtbock 4 integriert, insbesondere einlaminiert, sein. Der Gurtbock 4 kann hierbei als Kunststoffteil ausgestaltet sein, das faserverstärkt ist.

In diesem Ausführungsbeispiel erstreckt sich die Nutschiene 7 von der ersten Seite 18 des Gurtbocks 4 zu dem Stützfuß 15 hin. Umgekehrt erstreckt sich die Nutschiene 8 von der zweiten Seite 19 des Gurtbocks 4 zu dem Stützfuß 15 hin. Dadurch sind einerseits des Stützfußes 15 die Nutschiene 7 und andererseits des Stützfußes 15 die Nutschiene 8 an dem Gurtbock 4 befestigt. Bei einer abgewandelten Ausgestaltung, insbesondere wenn eine Nutschiene in den Gurtbock 4 einlaminiert ist, dann kann sich solch eine Nutschiene auch durchgehend von der ersten Seite 18 bis zur zweiten Seite 19 des Gurtbocks 4 erstrecken.

In diesem Ausführungsbeispiel sind die Anbauteile 5, 6 als Stützfüße 25, 26 ausgebildet. Hierbei sind in vorteilhafter Weise L-förmige Ausgestaltungen der Stützfüße 25, 26 realisiert. Diese ermöglichen eine Nutzung des entstehenden Platzes unter den L-förmigen Stützfüßen 25, 26 zur Aufbewahrung von Gegenständen. Je nach Ausgestaltung kann gegebenenfalls ein schräger Stützfuß 15 auch entfallen.

Im Folgenden ist die Ausgestaltung der Gurtbockanordnung 1 auch unter Bezugnahme auf die Fig. 3 bis 6 weiter beschrieben.

Fig. 3 zeigt ein Detail des in Fig. 1 gezeigten Gurtbocks 4. Hierbei ist exemplarisch die Nutschiene 7 beschrieben. In entsprechender Weise ergeben sich die Funktionsweise und Ausgestaltung der Nutschiene 8. Die Nutschiene 7 basiert auf einem Rechteckprofil 30, das an einer Befestigungsseite 31, an der das Anbauteil 5 an der Nutschiene 7 befestigt wird, eine schlitzförmige Öffnung 32 aufweist. Die schlitzförmige Öffnung 32 erstreckt sich hierbei entlang der gesamten Erstreckung 33 der Nutschiene 7.

Fig. 4 zeigt die in Fig. 3 gezeigte Nutschiene 7 vor der Befestigung an den Gurtbock 4.

Die Nutschiene 7 weist Befestigungsrippen 35, 36 auf, an denen das Anbauteil 5 befestigt beziehungsweise gehalten wird. Hierdurch kann ein Formschluss realisiert werden. Solch ein Formschluss kann beispielsweise anhand einer Schraubverbindung vermittelt sein, wie es anhand der Fig. 5 und 6 näher beschrieben ist. Die schlitzförmige Öffnung 32 ist zwischen den Befestigungsrippen 35, 36 ausgestaltet, um die Befestigung zu ermöglichen. Außerdem ermöglicht die schlitzförmige Öffnung 32 eine stufenlose und variable Positionierung beziehungsweise Vorgabe der Befestigungsposition 9. Die Befestigungsrippe 35 weist Ausnehmungen 37, 38 auf.

Entsprechend weist die Befestigungsrippe 36 Ausnehmungen 39, 40 auf, die den Ausnehmungen 37, 38 der Befestigungsrippe 35 zugeordnet sind. Die Ausnehmungen 37 bis 40 erweitern die schlitzförmige Öffnung 32 lokal, um das Einfügen von Befestigungsmitteln 41, 42 zu ermöglichen. Beispielsweise kann die Nutschiene 7 auf diese Weise über als Schrauben ausgestaltete Befestigungsmittel 41, 42 an den Gurtbock 4 geschraubt werden. Insbesondere Köpfe der Befestigungsmittel 41, 42 können hierdurch in die Nutschiene 7, 8 eingefügt werden.

Außerdem ist die Nutschiene 7 an ihren Stirnseiten 43, 44 geöffnet. Dies erlaubt das seitliche Einfügen eines Kopfes 50 eines Befestigungsmittels 51. Über ein weiteres Befestigungsmittel 52 kann dann eine formschlüssige Verbindung realisiert werden, um das Anbauteil 5 an beispielsweise einer Befestigungsplatte 53 des Anbauteils 5 mit der Nutschiene 7 zu verbinden, wie es in Fig. 5 und 6 dargestellt ist. Hierbei kann das Befestigungsmittel 51 als Schraube ausgebildet sein, während das weitere Befestigungsmittel 52 als Mutter ausgestaltet ist.

Die Erfindung ist nicht auf die beschriebenen Ausführungsbeispiele beschränkt.

## Patentansprüche

1. Gurtbockanordnung (1) für ein Freizeitfahrzeug (2), insbesondere ein Wohnmobil, mit einem Gurtbock (4), an dem zumindest ein Anbauteil (5, 6) befestigbar ist,
**dadurch gekennzeichnet,**
**dass** an dem Gurtbock (4) zumindest eine Nutschiene (7, 8) befestigt ist, dass das Anbauteil (5, 6) über die Nutschiene (7, 8) an dem Gurtbock (4) befestigbar ist und dass die Nutschiene (7, 8) so ausgestaltet ist, dass für die Befestigung des Anbauteils (5, 6) an der Nutschiene (7, 8) eine variable Befestigungsposition (9, 10) an der Nutschiene (7, 8) wählbar ist.

2. Gurtbockanordnung nach Anspruch 1,
**dadurch gekennzeichnet,**
**dass** die Nutschiene (7, 8) auf einem Rechteckprofil (30) basiert, das an einer Befestigungsseite (31), an der das Anbauteil (5, 6) an der Nutschiene (7, 8) befestigbar ist, eine schlitzförmige Öffnung (32) aufweist, die sich entlang einer Erstreckung (33) der Nutschiene (7, 8) erstreckt.

3. Gurtbockanordnung nach Anspruch 2,
**dadurch gekennzeichnet,**
**dass** die Nutschiene (7, 8) einander zugewandte Befestigungsrippen (35, 36) aufweist, an denen das Anbauteil (5, 6) an der Nutschiene (7, 8) befestigbar ist, wobei die schlitzförmige Öffnung (32) zwischen den Befestigungsrippen (35, 36) ausgestaltet ist.

4. Gurtbockanordnung nach Anspruch 3,
**dadurch gekennzeichnet,**
**dass** zumindest eine der Befestigungsrippen (35, 36) Ausnehmungen (37-40) aufweist, die die schlitzförmige Öffnung (32) lokal erweitern, wobei die Ausnehmungen (37-40) so ausgestaltet sind, dass zumindest ein Befestigungsmittel (41, 42) für die Befestigung der Nutschiene (7, 8) an dem Gurtbock (4) und/oder für die Befestigung des Anbauteils (5, 6) an der Nutschiene (7, 8) in die Nutschiene (7, 8) einfügbar ist.

5. Gurtbockanordnung nach einem der Ansprüche 1 bis 4,
**dadurch gekennzeichnet,**
**dass** die Nutschiene (7, 8) zum Einfügen zumindest eines Befestigungsmittels (41, 42) für die Befestigung des Anbauteils (5, 6) an der Nutschiene (7, 8) in einem Zustand, in dem die Nutschiene (7, 8) an dem Gurtbock (4) befestigt ist, an zumindest einer Stirnseite (43, 44) geöffnet ist.

6. Gurtbockanordnung nach einem der Ansprüche 1 bis 5,
**dadurch gekennzeichnet,**
**dass** die Nutschiene (7, 8) so ausgestaltet ist, dass für die Befestigung des Anbauteils (5, 6) an der Nutschiene (7, 8) eine stufenlose variable Befestigungsposition (9, 10) an der Nutzschiene (7, 8) wählbar ist.

7. Gurtbockanordnung nach einem der Ansprüche 1 bis 6,
**dadurch gekennzeichnet,**
**dass** zumindest ein mit dem Gurtbock (4) verbundener Stützfuß (15) vorgesehen ist, dass die Nutschiene (7) und eine weitere der Nutschiene (7) entsprechende Nutschiene (8) an einer Vorderseite (17) des Gurtbocks (4) angeordnet sind und dass einerseits des Stützfußes (15) die Nutschiene (7) und andererseits des Stützfußes (15) die weitere Nutschiene (8) an dem Gurtbock (4) befestigt sind.

8. Gurtbockanordnung nach einem der Ansprüche 1 bis 7,
**dadurch gekennzeichnet,**
**dass** sich die zumindest eine Nutschiene (7, 8) zumindest im Wesentlichen von einer ersten Seite (18) des Gurtbocks (4) zu einer von der ersten Seite (18) des Gurtbocks (4) abgewandten zweiten Seite (19) des Gurtbocks (4) erstreckt.

9. Gurtbockanordnung nach einem der Ansprüche 1 oder 8,
**dadurch gekennzeichnet,**
**dass** zumindest ein Stützfuß (25, 26), insbesondere ein L-förmiger Stützfuß (25, 26), vorgesehen ist, der einerseits in der Nutschiene (7, 8) befestigt und andererseits zumindest mittelbar an einem Boden (3) des Freizeitfahrzeugs abstützbar ist.

10. Freizeitfahrzeug (2), insbesondere Wohnmobil, mit zumindest einer Gurtbockanordnung (1) nach einem der Ansprüche 1 bis 9.
